# EUROPEAN PATENT SPECIFICATION

(11) **EP 2 960 093 B1**
(45) Date of publication and mention of the grant of the patent: **02.08.2017**
(21) Application number: 15172099.2
(22) Date of filing: 15.06.2015
(51) Int. Cl.: B60K 15/04, B60K 15/03

(54) **GROUNDED FUEL TANK ASSEMBLY**
GEERDETE KRAFTSTOFFTANKANORDNUNG
ENSEMBLE RÉSERVOIR DE CARBURANT MIS À LA TERRE

(30) Priority: 26.06.2014 US 201414315428
(43) Date of publication of application: 30.12.2015
(73) Proprietor: Deere & Company, Moline, IL 61265 (US)
(72) Inventor: Gardner, Jeffrey L, Hudson, IA Iowa 50643 (US); Brown, Jeffrey K, Dike, IA Iowa 50624 (US)
(74) Representative: John Deere GmbH & Co. KG

(56) References cited:
- DE-A1-102012 022 129
- DE-U1-202005 008 327
- FR-A1- 2 774 041
- JP-A- H0 357 724

## Description

The present invention refers to a grounded fuel tank assembly.

Fuel flowing from a hose or container into an ungrounded fuel tank or movement of fuel within the fuel tank can cause the formation of a static charge. Regulations, such as SAE J1645, require grounding of a fuel tank so as to eliminate static charge buildup. In this connection, US 4 540 191 shows a fuel tank which is grounded to a vehicle chassis by means including a metal filler neck portion forming a sole electrical conducting portion of the tank, a metal vent tube connected between the metal filler neck portion and a metal tank mounting bracket secured to the vehicle chassis and a ground cable or wire connected to the filler neck portion and dangling into the tank. However, most fuel tanks are made entirely of a non-metallic material such as plastic. Some fuel tanks are internally grounded by a metal insert which is connected to the body of a fuel sender via a metal wire/cable, but such fuel tanks are difficult to assemble and service. JP H03 57724 describes a grounded fuel tank according to the preamble of claim 1.

Accordingly, it is desired to provide an simplified grounded fuel tank assembly to prevent a static charge buildup for a non-metallic fuel tank.

This and other objects are achieved by the present invention, wherein a grounded fuel tank assembly is provided. The grounded fuel tank assembly comprises a fuel tank having a non-metallic container and a non-metallic filler neck. The filler neck has an opening surrounded by a lip. The opening is adapted to receive a shank portion of a fuel cap. An electrically conductive insert member has a sleeve which is received by the filler neck and a ring-shaped outer part which at least partially surrounds a portion of the filler neck. An electrically conductive ground strap exterior to the container engages the outer part, the insert member comprises a hollow cylindrical sleeve which is received by the filler neck, the sleeve having external threads formed thereon, and the filler neck having internal threads which engage the external threads formed on the sleeve. For a complete understanding of the objects, techniques, and structure of the invention reference should be made to the following detailed description and accompanying drawings:
- Fig. 1: is a perspective view of an upper portion of a grounded fuel tank assembly embodying the invention,
- Fig. 2: is a perspective view of an insert being part of the grounded fuel tank assembly shown in Fig. 1, and
- Fig. 3: is a sectional view taken along a center line of a ground strap of the grounded fuel tank assembly shown in Fig. 1.

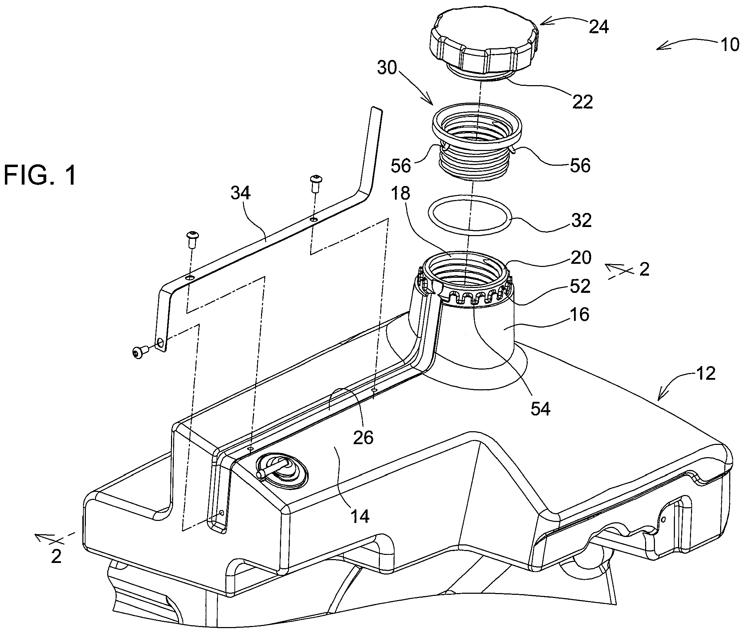

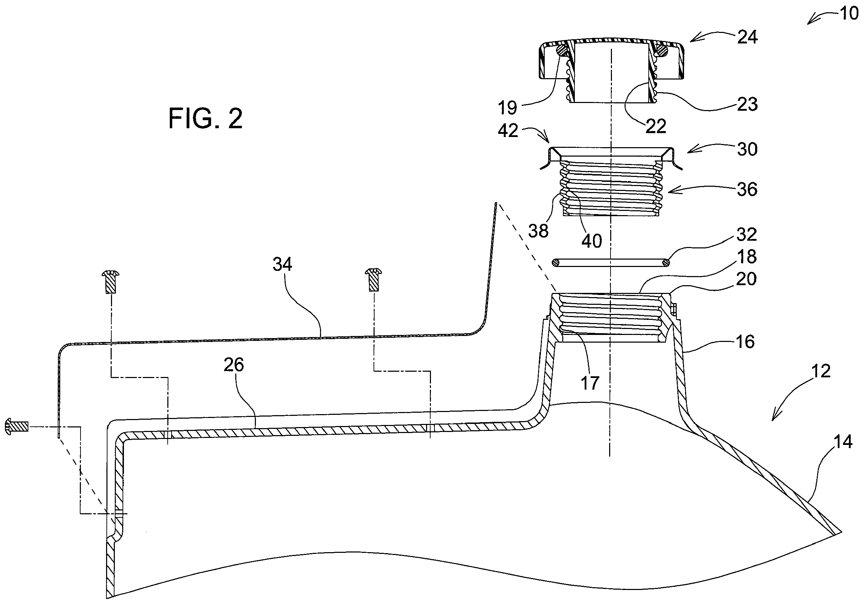

Referring to Figs. 1 and 2, a grounded fuel tank assembly 10 includes a fuel tank 12 which has a non-metallic tank or container 14 and a non-metallic hollow filler neck 16 which projects from the container 14. The filler neck 16 has an opening 18 which is surrounded by a lip 20. The opening 18 is adapted to receive a hollow stem or shank portion 22 of a fuel cap 24. An O-ring 19 is mounted around a base portion of the shank portion 22. The shank portion 22 includes external threads 23. A groove 26 is formed in an outer surface of the fuel tank 14 and the filler neck 16. The grounded fuel tank assembly 10 also includes an insert member 30, an O-ring 32 and a ground strap 34. The ground strap 34 is received by the groove 26. Alternatively, a wire (not shown) in a molded channel could also be used, or a conductor could be molded into the fuel tank 12 to complete the grounding system between the metal fuel fill insert a vehicle ground.

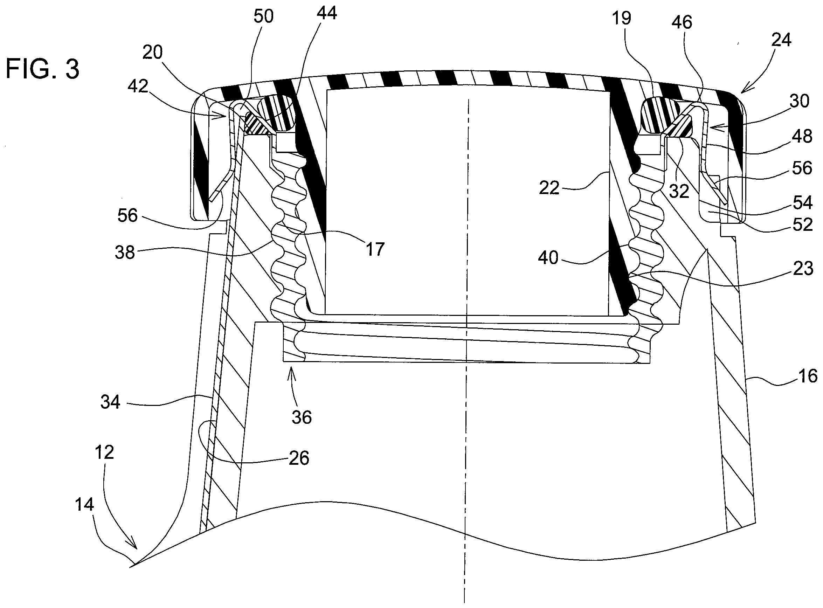

Referring now to Figs. 2 and 3, the filler neck 16 includes internal threads 17. The insert member 30 is an electrically conductive, hollow, cylindrical member. The insert member 30 has a hollow cylindrical inner part or sleeve 36 which is received by the filler neck 16. The sleeve 36 includes external threads 38 which engage the internal threads 17 of the filler neck 16. The sleeve 36 also includes internal threads 40 which engage the external threads 23 of the shank portion 22 of the fuel cap 24.

The insert member 30 also has a ring-shaped outer part 42. The outer part 42 is joined to an end of the sleeve 36. The outer part 42 includes an annular frusto-conical inner ring 44 which is joined to an end of the sleeve 36 and which extends axially away and radially outwardly from sleeve 36 to a curved outer rim 46. The outer part 42 also includes an outer ring 48 which extends axially away from the outer rim 46 and towards the sleeve 36. The outer part 42 thereby forms an annular recess 50 which opens away from the outer rim 46 and towards the lip 20 of the filler neck 16.

As best seen in Fig. 3, the outer part 42 receives the lip 20 of the filler neck 16 and the O-ring 32. Thus, the O-ring 32 forms a seal between the lip 20 and the inner ring 44 of outer part 42. The O-ring 19 forms a seal between the fuel cap 24 and the inner ring 44 of insert member 30. The outer part 42 also receives an end of the ground strap 34 so that the ground strap 34 makes electrical contact with the outer ring 48. A plurality of spaced apart tabs 56 project away from an outer edge of the outer ring 48.

As best seen in Figs. 2 and 3, an upper portion of the filler neck 16 is surrounded by a plurality of evenly spaced fingers 52 which are separated by a corresponding plurality of upwardly opening slots 54. Each tab 56 can be bent into a corresponding one of the slots 54 to prevent the insert member 30 from being rotated and unscrewed from the filler neck 16.

Thus, the fuel tank ground assembly 10 includes an insert member 30 which has external threads 38 for securing it to the molded plastic fuel tank 12, internal threads 40 for securing the fuel cap 24, and tabs 56 which engage the filler neck 16 to prevent unscrewing of the insert member 30.

As the insert member 30 is screwed into the filler neck 16, a constant force pushes the grounding strap 34 inwardly towards the filler neck 16. The molded groove 26 locates the ground strap 34 in a defined position and to resist strap rotation while installing the insert member 30. The groove 26 has room for a robust ground strap 34 that is less susceptible to damage and entanglement than a grounding wire. The result is a grounded fuel tank assembly 10 which is simple to put together.

## Claims

1. A grounded fuel tank assembly comprising a fuel tank (12) having a non-metallic container (14) and a non-metallic filler neck (16), the filler neck (16) having an opening (18) surrounded by a lip (20), the opening (18) being adapted to receive a shank portion (22) of a fuel cap (24); an electrically conductive insert member (30), the insert member (30) having a sleeve (36) which is received by the filler neck (16) and a ring-shaped outer part (42) which at least partially surrounds a portion of the filler neck (16); and an electrically conductive ground strap (34) exterior to the container (14), the ground strap (34) engaging the outer part (42), wherein the insert member (30) comprises a hollow cylindrical sleeve (36) which is received by the filler neck (16), **characterized in that** the sleeve (36) having external threads (38) formed thereon, and the filler neck (16) having internal threads (17) which engage the external threads (38) formed on the sleeve (36).

2. The grounded fuel tank assembly according to claim 1, **characterized in that** the outer part (42) forms an annular recess (50) which receives the lip (20), and the ground strap (34) has an end which engages the insert member (30) and which is received by the annular recess (50).

3. The grounded fuel tank assembly according to claim 1, **characterized in that** a portion of the filler neck (16) is surrounded by a plurality of evenly spaced fingers (52) which are separated by a corresponding plurality of upwardly opening slots (54), and the insert member (30) includes a plurality of tabs (56) which project away from an outer edge of the outer part (42), each tab (56) being bendable into a corresponding one of the slots (54) to hold the insert member (30) onto the filler neck (16).

4. The grounded fuel tank assembly according to claim 1, **characterized in that** the insert member (30) comprises a hollow cylindrical sleeve (36) which is received by the filler neck (16), an annular frusto-conical inner ring (44) which is joined to an end of the sleeve (36), and an outer ring (48) which extends away from the inner ring (44) and which at least partially surrounds a portion of the filler neck (16).

5. The grounded fuel tank assembly according to claim 1, **characterized in that** the fuel cap (24) includes a hollow shank portion (22), the shank portion (22) having external threads (23) formed thereon, and the insert member (30) comprises a hollow cylindrical sleeve (36) which is received by the filler neck (30), the sleeve (36) having internal threads (40) formed thereon, said internal threads (40) engaging the external threads (23) of the shank portion (22).

6. The grounded fuel tank assembly according to claim 1, **characterized in that** a portion of the ground strap (34) is held between an outer surface of the filler neck (16) and the outer part (42).

7. The grounded fuel tank assembly according to claim 1, **characterized in that** an O-ring (32) sealingly engages the lip (20) and the insert member (30).

8. The grounded fuel tank assembly according to claim 7, **characterized in that** a further O-ring (19) sealingly engages the fuel cap (24) and the insert member (30).

9. The grounded fuel tank assembly according to claim 2, **characterized in that** an O-ring (32) is received by the annular recess (50) and sealingly engages the lip (20) and the insert member (30).

10. The grounded fuel tank assembly according to claim 1, **characterized in that** the ground strap (34) extends along an outer surface of the container (14) and along an outer surface of the filler neck (16).

## Patentansprüche

1. Geerdete Kraftstofftankanordnung, umfassend: einen Kraftstofftank (12) mit einem nichtmetallischen Behälter (14) und einem nichtmetallischen Einfüllstutzen (16), wobei der Einfüllstutzen (16) eine von einer Lippe (20) umgebene Öffnung (18) hat, wobei die Öffnung (18) ausgebildet ist, um einen Schaftabschnitt (22) eines Tankdeckels (24) aufzunehmen; ein elektrisch leitfähiges Einsatzelement (30), wobei das Einsatzelement (30) eine Hülse (36), die vom Einfüllstutzen (16) aufgenommen wird, sowie ein ringförmiges Außenteil (42) hat, das mindestens teilweise einen Abschnitt des Einfüllstutzens (16) umgibt; sowie ein elektrisch leitfähiges Erdungsband (34) außen am Behälter (14), wobei das Erdungsband (34) in das Außenteil (42) eingreift, wobei das Einsatzelement (30) eine hohle zylindrische Hülse (36) umfasst, die vom Einfüllstutzen (16) aufgenommen wird, **dadurch gekennzeichnet, dass** die Hülse (36) daran ausgebildete Außengewinde (38) und der Einfüllstutzen (16) Innengewinde (17) hat, die in die an der Hülse (36) ausgebildeten Außengewinde (38) eingreifen.

2. Geerdete Kraftstofftankanordnung nach Anspruch 1, **dadurch gekennzeichnet, dass** das Außenteil (42) einen ringförmigen Rücksprung (50) bildet, der die Lippe (20) aufnimmt, und das Erdungsband (34) ein Ende hat, das in das Einsatzelement (30) eingreift und vom ringförmigen Rücksprung (50) aufgenommen wird.

3. Geerdete Kraftstofftankanordnung nach Anspruch 1, **dadurch gekennzeichnet, dass** ein Abschnitt des Einfüllstutzens (16) von mehreren gleichmäßig beabstandeten Fingern (52) umgeben ist, die durch mehrere entsprechende, nach oben offene Schlitze (54) getrennt sind, und dass das Einsatzelement (30) mehrere Zungen (56) beinhaltet, die von einer Außenkante des Außenteils (42) abstehen, wobei jede Zunge (56) biegbar in einen entsprechenden der Schlitze (54) einfügbar ist, um so das Einsatzelement (30) auf dem Einfüllstutzen (16) zu halten.

4. Geerdete Kraftstofftankanordnung nach Anspruch 1, **dadurch gekennzeichnet, dass** das Einsatzelement (30) eine hohle zylindrische Hülse (36), die vom Einfüllstutzen (16) aufgenommen wird, einen ringförmigen kegelstumpfförmigen Innenring (44), der mit einem Ende der Hülse (36) verbunden ist, sowie einen Außenring (48) umfasst, der sich weg vom Innenring (44) erstreckt und mindestens teilweise einen Abschnitt des Einfüllstutzens (16) umgibt.

5. Geerdete Kraftstofftankanordnung nach Anspruch 1, **dadurch gekennzeichnet, dass** der Tankdeckel (24) einen hohlen Schaftabschnitt (22) beinhaltet, wobei der Schaftabschnitt (22) daran ausgebildete Außengewinde (23) hat, und wobei das Einsatzelement (30) eine hohle zylindrische Hülse (36) umfasst, die vom Einfüllstutzen (30) aufgenommen wird, wobei die Hülse (36) daran ausgebildete Innengewinde (40) hat, und wobei die Innengewinde (40) in die Außengewinde (23) des Schaftabschnitts (22) eingreifen.

6. Geerdete Kraftstofftankanordnung nach Anspruch 1, **dadurch gekennzeichnet, dass** ein Abschnitt des Erdungsbands (34) zwischen einer Außenfläche des Einfüllstutzens (16) und dem Außenteil (42) gehalten wird.

7. Geerdete Kraftstofftankanordnung nach Anspruch 1, **dadurch gekennzeichnet, dass** ein O-Ring (32) in abdichtender Weise in die Lippe (20) und das Einsatzelement (30) eingreift.

8. Geerdete Kraftstofftankanordnung nach Anspruch 7, **dadurch gekennzeichnet, dass** ein weiterer O-Ring (19) in abdichtender Weise in den Tankdeckel (24) und das Einsatzelement (30) eingreift.

9. Geerdete Kraftstofftankanordnung nach Anspruch 2, **dadurch gekennzeichnet, dass** ein O-Ring (32) vom ringförmigen Rücksprung (50) aufgenommen wird und in abdichtender Weise in die Lippe (20) und das Einsatzelement (30) eingreift.

10. Geerdete Kraftstofftankanordnung nach Anspruch 1, **dadurch gekennzeichnet, dass** sich das Erdungsband (34) entlang einer Außenfläche des Behälters (14) und entlang einer Außenfläche des Einfüllstutzens (16) erstreckt.

## Revendications

1. Ensemble formant réservoir de carburant mis à la terre comprenant un réservoir de carburant (12) comportant un réceptacle (14) non métallique et un goulot de remplissage (16) non métallique, le goulot de remplissage (16) comportant une ouverture (18) entourée par une lèvre (20), l'ouverture (18) étant conçue pour recevoir une partie tronc (22) d'un bouchon de réservoir de carburant (24) ; un organe formant garniture (30) électriquement conducteur, l'organe formant garniture (30) comportant un manchon (36) qui est reçu dans le goulot de remplissage (16) et une partie extérieure (42) annulaire qui entoure au moins partiellement une partie du goulot de remplissage (16) ; et une bande de mise à la terre électriquement conductrice (34) extérieure au réceptacle (14), la bande de mise à la terre (34) venant en prise avec la partie extérieure (42), l'organe formant garniture (30) comprenant un manchon (36) cylindrique creux qui est reçu dans le goulot de remplissage (16), **caractérisé en ce que** le manchon (36) comporte des filets extérieurs (38) formés sur celui-ci, et le goulot de remplissage (16) comporte des filets intérieurs (17) qui coopèrent avec les filets extérieurs (38) formés sur le manchon (36).

2. Ensemble formant réservoir de carburant mis à la terre selon la revendication 1, **caractérisé en ce que** la partie extérieure (42) forme une cavité annulaire (50) qui reçoit la lèvre (20), et la bande de mise à la terre (34) comporte une extrémité qui vient en prise avec l'organe formant garniture (30) et qui est reçue dans la cavité annulaire (50).

3. Ensemble formant réservoir de carburant mis à la terre selon la revendication 1, **caractérisé en ce qu'**une partie du goulot de remplissage (16) est entourée par une pluralité de pattes équidistantes (52) qui sont séparées par une pluralité correspondante d'évidements ouverts vers le haut (54), et l'organe formant garniture (30) comprend une pluralité de languettes (56) qui font saillie à partir d'un bord extérieur de la partie extérieure (42), chaque languette (56) pouvant être fléchie de façon à l'insérer dans un évidement correspondant parmi les évidements (54) afin de maintenir l'organe formant garniture (30) sur le goulot de remplissage (16).

4. Ensemble formant réservoir de carburant mis à la terre selon la revendication 1, **caractérisé en ce que** l'organe formant garniture (30) comprend un manchon (36) cylindrique creux qui est reçu dans le goulot de remplissage (16), une bague intérieure (44) annulaire tronconique qui est reliée à une extrémité du manchon (36), et une bague extérieure (48) qui s'étend à partir de la bague intérieure (44) et qui entoure au moins partiellement une partie du goulot de remplissage (16).

5. Ensemble formant réservoir de carburant mis à la terre selon la revendication 1, **caractérisé en ce que** le bouchon de réservoir de carburant (24) comprend une partie tronc (22) creuse, la partie tronc (22) comportant des filets extérieurs (23) formés sur celle-ci, et l'organe formant garniture (30) comprend un manchon (36) cylindrique creux qui est reçu dans le goulot de remplissage (30), le manchon (36) comportant des filets intérieurs (40) formés sur celui-ci, lesdits filets intérieurs (40) coopérant avec les filets extérieurs (23) de la partie tronc (22).

6. Ensemble formant réservoir de carburant mis à la terre selon la revendication 1, **caractérisé en ce qu'**une partie de la bande de mise à la terre (34) est maintenue entre une surface extérieure du goulot de remplissage (16) et la partie extérieure (42).

7. Ensemble formant réservoir de carburant mis à la terre selon la revendication 1, **caractérisé en ce qu'**un joint torique (32) s'applique à étanchéité sur la lèvre (20) et sur l'organe formant garniture (30).

8. Ensemble formant réservoir de carburant mis à la terre selon la revendication 7, **caractérisé en ce qu'**un joint torique supplémentaire (19) s'applique à étanchéité sur le bouchon de réservoir de carburant (24) et sur l'organe formant garniture (30).

9. Ensemble formant réservoir de carburant mis à la terre selon la revendication 2, **caractérisé en ce qu'**un joint torique (32) est reçu dans la cavité annulaire (50) et s'applique à étanchéité sur la lèvre (20) et sur l'organe formant garniture (30).

10. Ensemble formant réservoir de carburant mis à la terre selon la revendication 1, **caractérisé en ce que** la bande de mise à la terre (34) s'étend le long d'une surface extérieure du réceptacle (14) et le long d'une surface extérieure du goulot de remplissage (16).
